# EUROPEAN PATENT APPLICATION

(11) **EP 4 513 315 A1**
(43) Date of publication of application: **26.02.2025**
(21) Application number: 24193074.2
(22) Date of filing: 06.08.2024
(51) Int. Cl.: G06F 3/0481, G06F 3/04817, G06F 3/0482

(54) **OPERATION SUPPORT DEVICE, OPERATION SUPPORT METHOD, AND PROGRAM**

(30) Priority: 23.08.2023 JP 2023135312
(71) Applicant: Casio Computer Co., Ltd., Tokyo 151-8543 (JP)
(72) Inventor: Hasunuma, Takuya, Hamura-shi, Tokyo, 205-8555 (JP)
(74) Representative: Grünecker Patent- und Rechtsanwälte PartG mbB

(57) **Abstract**

Provided is an operation support device (20) that displays at least one operation icon as a predetermined operation menu, including a processor (21) that shows the operation icon as a first operation icon (243c) for opening an operation screen for executing a predetermined operation process. The processor disposes a second operation icon (243d) associated with a link to a first operation manual corresponding to the operation process within an area of the first operation icon, and shows a third operation icon (243a) associated with a link to a second operation manual corresponding to the operation menu with the first operation icon.

## Description

### TECHNICAL FIELD

The present disclosure relates to an operation support device, an operation support method, and a program.

### BACKGROUND OF THE INVENTION

Conventionally, there has been an information processing device that has a function of displaying a manual on its display for explaining functions of the device.

In this regard, Patent Literature 1 (JP2007140851A) discloses an electronic device that displays, when help information is shown on its display in response to a command from an operation means, information on a link to show a related manual for obtaining help information, and obtains contents of the related manual in the link destination to show the contents.

Patent Literature 2 (JP2017162235A) further discloses a currency processor that shows on a display operation part a manual with link information to an operation screen corresponding to each item.

### PROBLEMS TO BE SOLVED

However, in a conventional technology of displaying manuals, users cannot intuitively grasp how to operate in functions of an information processing device or the like.

### SUMMARY OF THE INVENTION

According to an aspect of the present disclosure, there is provided an operation support device that displays at least one operation icon as a predetermined operation menu, including:
a processor that shows the operation icon as a first operation icon for opening an operation screen for executing a predetermined operation process,
wherein the processor:
   disposes a second operation icon associated with a link to a first operation manual corresponding to the operation process within an area of the first operation icon; and
   shows a third operation icon associated with a link to a second operation manual corresponding to the operation menu with the first operation icon.

### ADVANTAGEOUS EFFECTS OF INVENTION

By virtue of the present invention, users can more easily grasp how to operate a device in terms of functions of the device.

### BRIEF DESCRIPTION OF THE DRAWINGS

The accompanying drawings are not intended as a definition of the limits of the invention but illustrate embodiments of the invention, and together with the general description given above and the detailed description of the embodiments given below, serve to explain the principles of the invention, wherein:
FIG. 1 is a block diagram showing a learning support system in an embodiment of the present disclosure;
FIG. 2 is a block diagram showing an internal structure of a server;
FIG. 3 is a block diagram showing an internal structure of a terminal device;
FIG. 4 is a ladder chart showing a flow of an administrator support function;
FIG. 5 is a flowchart showing an administrator support process;
FIG. 6 is a flowchart showing a screen display process;
FIG. 7 is a flowchart showing a size setting process;
FIG. 8 is a flowchart showing a positioning process;
FIG. 9 is an example of an administrator menu screen;
FIG. 10 is an example of an administrator menu screen including a process icon with error information;
FIG. 11 is an example of an administrator menu screen including a process icon with update information;
FIG. 12 is an example of an administrator menu screen including update information and a process icon with error information;
FIG. 13 is an example showing an administrator menu screen including an execution area;
FIG. 14 is an example showing a general manual screen; and
FIG. 15 is an example showing an individual manual screen of "Class Management."

### DETAILED DESCRIPTION

Embodiments of the present disclosure are described in detail below with reference to the drawings.

### <1. Configuration of Learning Support System>

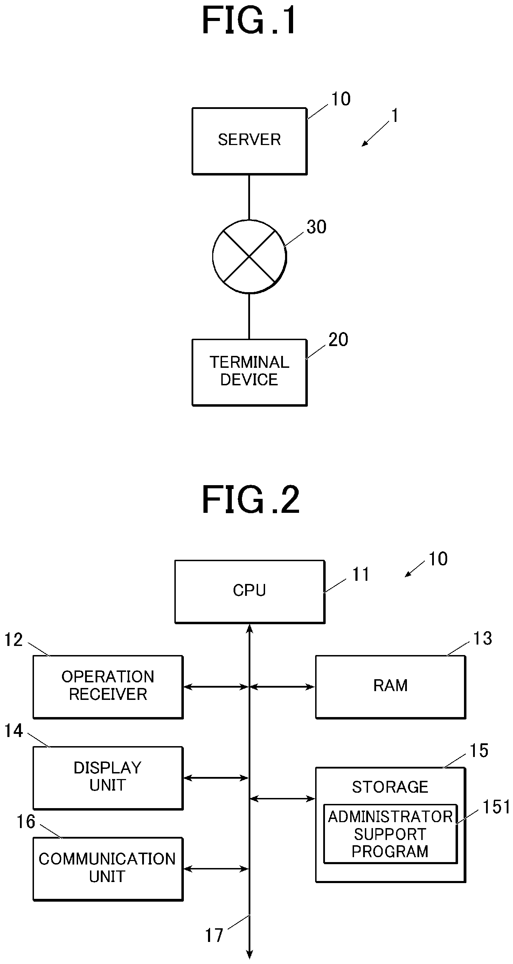

FIG. 1 is a block diagram showing a learning support system 1 in this embodiment.

The learning support system 1 is provided with a server 10, and a terminal device 20 as an operation support device.

The server 10 and the terminal device 20 are connected with each other via a communication network 30.

The communication network 30, which is a network that relays communication between the server 10 and the terminal device 20, shall be internet, for example, but may include local area network (LAN), a leased line, or the like.

The learning support system 1 has an administrator support function that provides an administrator of an educational institution with support for management of account information of students and teachers, class information, course information, and the like.

The learning support system 1 has a teacher support function that provides teachers in an educational institution with teaching support such as creation and distribution of assignments, running courses, and the like.

The learning support system 1 has a learning support function that provides students in the educational institution with classroom support such as creation of a notebook for a course, an online dictionary, a mathematical tool, and submission of assignments from their teachers.

In this embodiment, an administrator support function is described among these functions of the learning support system 1. The administrator support function is provided to a user whose account information (ID and password) has been registered as an administrator in the server 10 in advance.

The server 10 is a web server device on the cloud of the communication network 30 and provides the above-described administrator support function to the terminal device 20.

The terminal device 20 is an information processing device used by the user who is an administrator, and is a laptop computer, for example. However, the terminal device 20 is not limited to a laptop computer, and may be a desktop computer, a tablet computer, a smartphone, or the like. The terminal device 20 in FIG. 1 representatively shows one of multiple terminal devices 20 used by multiple users.

### <1-1. Server Configuration>

FIG. 2 is a block diagram showing an internal structure of the server 10.

As shown in FIG. 2, the server 10 is provided with a central processing unit (CPU) 11, an operation receiver 12, a random access memory (RAM) 13, a display unit 14, a storage 15, and a communication unit 16. The components of the server 10 are connected with each other via a bus 17.

The CPU 11 controls the components of the server 10. The CPU 11 reads out a program specified among various programs stored in the storage 15, deploys the read out program in the RAM 13, and executes various kinds of processing in cooperation with the deployed program.

The operation receiver 12, which has a keyboard with various keys and a pointing device for receiving positional input such as a mouse, receives operations of key input and positional input from a user and outputs the operation information to the CPU 11.

The RAM 13, which is a volatile semiconductor memory from which information can be read and on which information can be written, provides a work area to the CPU 11 and temporarily stores data and programs.

The display unit 14 includes a display panel such as a liquid crystal display (LCD) and an electro-luminescence display, and shows various kinds of information input from the CPU 11 and the like on the display panel.

The storage 15, which consists of a hard disk drive (HDD), a solid state drive (SSD), or the like, is a storage from which information can be read and on which information can be written and stores various kinds of data and programs.

The storage 15 stores an administrator support program 151 which has the above-described administrator support function.

The administrator support program 151 is not a program executed by the CPU 11, but is program code that is to be executed on a browser of the terminal device 20. The browser is a software for connecting to a Web server, receiving data of a Web site, and displaying the data of the Web site. The administrator support program 151 includes a program for executing an administrator support process which will be described later.

The communication unit 16 is, for example, a network card to be connected to the communication network 30.

The communication unit 16 sends and receives information to and from external devices such as the terminal device 20 on the communication network 30 under the command by the CPU 11.

The communication unit 16 is a wired communication unit connected to the communication network 30 with wires, but is not limited to this example. The communication unit 16 may be a wireless communication unit that performs wireless communication, which is connected to the communication network 30 via a base station or an access point.

### <1-2. Configuration of Terminal Device>

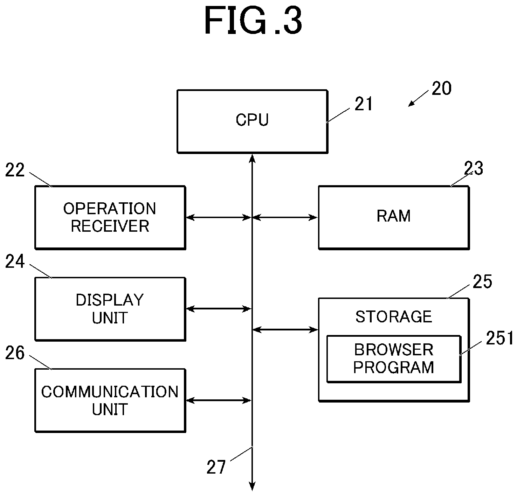

FIG. 3 is a block diagram showing an internal structure of the terminal device 20.

As shown in FIG. 3, the terminal device 20 is provided with a CPU 21 as a controller (processor), an operation receiver 22, a RAM 23, a display unit 24, a storage 25, and a communication unit 26. The components of the terminal device 20 are connected with

### each other via a bus 27.

The CPU 21 controls the components of the terminal device 20. The CPU 21 reads out a program specified among various programs stored in the storage 25, deploys the read out program in the RAM 23, and executes various kinds of processing in cooperation with the deployed program.

The operation receiver 22, which has a keyboard with various keys and a pointing device for receiving positional input such as a mouse, receives operations of key input and positional input from a user and outputs the operation information to the CPU 21. In this embodiment, the operation receiver 22 has a mouse as a pointing device. The operation receiver 22 may include a touch panel which is integrally formed on a display panel of the display unit 24 to receive touch input from the user.

The RAM 23, which is a volatile semiconductor memory from which information can be read and on which information can be written, provides a work area to the CPU 21 and temporarily stores data and programs.

The display unit 24 includes a display panel such as an LCD and an EL display, and shows various kinds of information input from the CPU 21 and the like on the display panel.

The storage 25, which consists of an HDD, an SSD, or the like, is a storage from which information can be read and on which information can be written and stores various kinds of data and programs.

The storage 25 stores an administrator support program 251 which has the above-described administrator support function.

The communication unit 26 is, for example, a network card to be connected to the communication network 30.

The communication unit 26 sends and receives information to and from external devices such as the server 10 on the communication network 30 under the command by the CPU 21.

The communication unit 26 is a wired communication unit connected to the communication network 30 with wires, but is not limited to this example. The communication unit 26 may be a wireless communication unit which performs wireless communication and may be connected to the communication network 30 via a base station or an access point.

### <2. Functioning of Learning Support System>

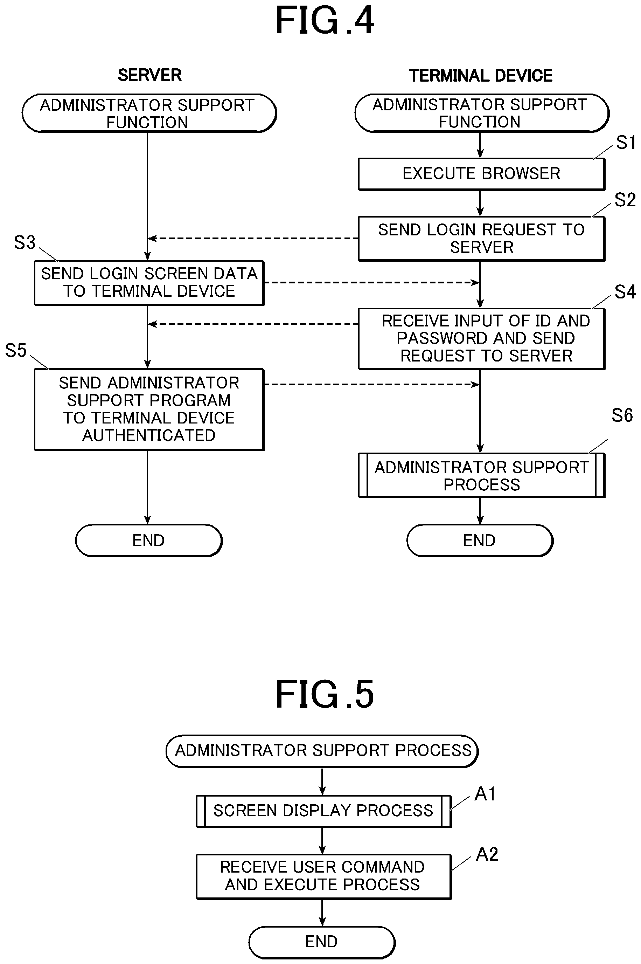

Next, the functioning of the learning support system 1 of the present embodiment is described with reference to FIGs. 4 to 15.

In the following description, a user who is registered as the administrator utilizes the administrator support function on the terminal device 20 in the learning support system 1.

FIG. 4 is a ladder chart showing the flow of the administrator support function.

### <2-1. Flow of Administrator Support Function>

First, triggered by input of a command for execution of the browser by the user via the operation receiver 22 on the terminal device 20, the CPU 21 executes the browser according to a browser program 251 (Step S1).

Next, triggered by input of a uniform resource locator (URL) for providing the support function of the learning support system 1 by the user via the operation receiver 22 on the terminal device 20 where the browser is running, the CPU 21 sends a login request of the user to the server 10 via the communication unit 26 using the input URL (Step S2).

Next, on the server 10, upon receipt of the login request from the terminal device 20 via the communication unit 16, the CPU 11 generates data for login screen and sends it to the terminal device 20 that has sent the request (Step S3).

Next, on the terminal device 20, the CPU 21 receives the data for the login screen from the server 10 via the communication unit 26 to show the login screen on the display unit 24. Then, the CPU 21 receives input of an ID and password by the user via the operation receiver 22, and sends the input ID and password to the server 10 via the communication unit 26 (Step S4).

Next, on the server 10, upon receipt of the ID and password from the terminal device 20 via the communication unit 16, the CPU 11 performs login authentication of the user using the received ID and password. After successful login authentication of the user, the CPU 11 reads out the administrator support program 151 from the storage 15, and sends the administrator support program 151 to the terminal device 20 that has been authenticated via the communication unit 16 (Step S5).

Next, the CPU 21 receives the administrator support program 151 from the server 10 on the terminal device 20 via the communication unit 26, and executes the administrator support program 151 on the browser. The CPU 21 executes the administrator support process shown in FIG. 5 on the browser (Step S6).

Next, described is the administrator support process which the CPU 21 executes at Step S6.

FIG. 5 is a flowchart showing the administrator support process.

### <2-2. Administrator Support Process>

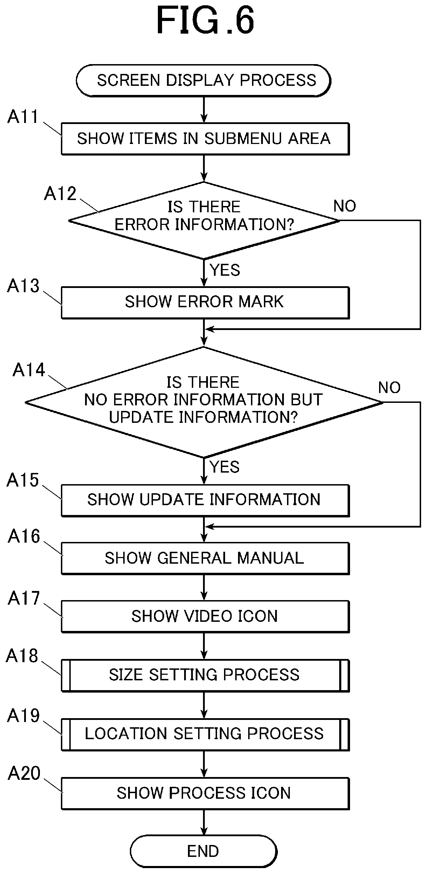

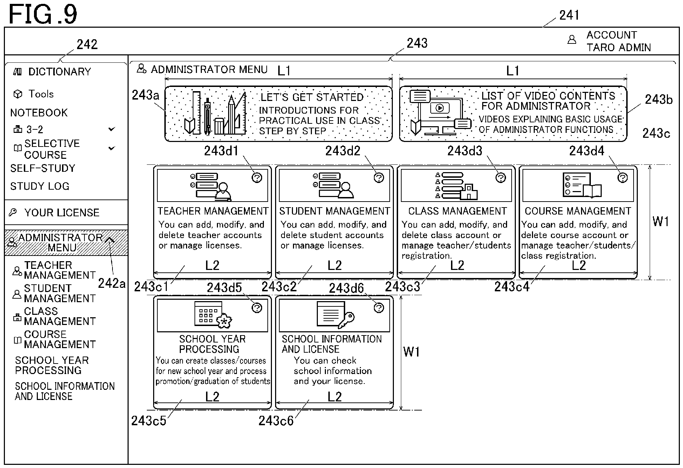

First, the CPU 21 executes the screen display process shown in FIG. 6 (Step A1). The CPU 21 executes the screen display process and thereby displays an administrator menu screen 241 in FIGs. 9 to 12 on the display unit 24. The administrator menu screen 241 includes a submenu area 242 and an administrator menu area 243 as shown in FIGs. 9 to 12. Step A1 is a control step.

### (Screen Display Process)

In the screen display process, the CPU 21 displays various tools (dictionary, notebook, etc.), items on an administrator menu, and the like, in the submenu area 242 (Step A11).

The items on the administrator menu are, for example, "Teacher Management," "Student Management," "Class Management," "Course Management," "School Year Management," and "School Information and License."

The CPU 21 sets a menu display button 242a in the submenu area 242. Upon receipt of a pressing action of the menu display button 242a by the user via the operation receiver 22, the CPU 21 displays the items on the administrator menu, "Teacher Management," "Student Management," "Class Management," "Course Management," "School Year Management," and "School Information and License," in the submenu area 242. Upon next receipt of a pressing action of the menu display button 242a by the user via the operation receiver 22, the CPU 21 hides the items on the administrator menu, "Teacher Management," "Student Management," "Class Management," "Course Management," "School Year Processing," and "School Information and License," from the submenu area 242.

Given here is an explanation of the items on the administrator menu.

In "Teacher Management," account information on each teacher who uses the learning support system 1 is registered, edited, or deleted according to a commanding operation by the user who is the administrator.

In "Student Management," account information on each student who uses the learning support system 1 is registered, edited, or deleted according to a commanding operation by the user who is the administrator.

In "Class Management," class information is registered, edited, or deleted, and teachers and students are registered in class information according to a commanding operation by the user who is the administrator. The class information includes information on a grade level, class, school year, and the like.

In "Course Management," course information is registered, edited, or deleted, and teachers, students, and classes are registered in the course information according to a commanding operation by the user who is the administrator. The course information includes information on a subject, type of course, name of course, description of course, school year, grade level, class, and the like.

In "School Year Processing," class information and course information for a new school year are created at the end of a school year, and promotion/graduation of students are processed according to a commanding operation by the user who is the administrator.

In "School Information and License," the school information and the license that the school owns in the learning support system 1 are displayed. The school information includes a school name, school ID, start/end dates of the contract and the like of the learning support system 1.

Next, the CPU 21 determines whether there is error information in each item of the administrator menu (Step A12).

Error information in "Course Management" is, for example, information indicating that there is course information with no teacher registered.

Error information in "School Year Processing" is, for example, information indicating that there are less than predetermined days (e.g. 90 days) are left before the end of the school year.

Error information in "School Information and License" is, for example, information indicating that the expiration of the owned license is approaching.

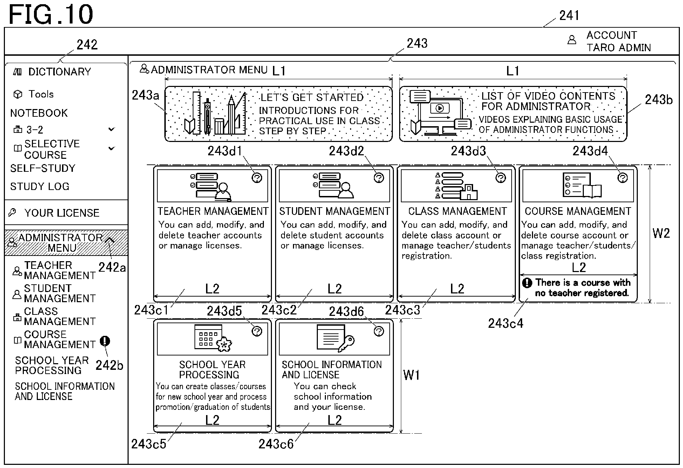

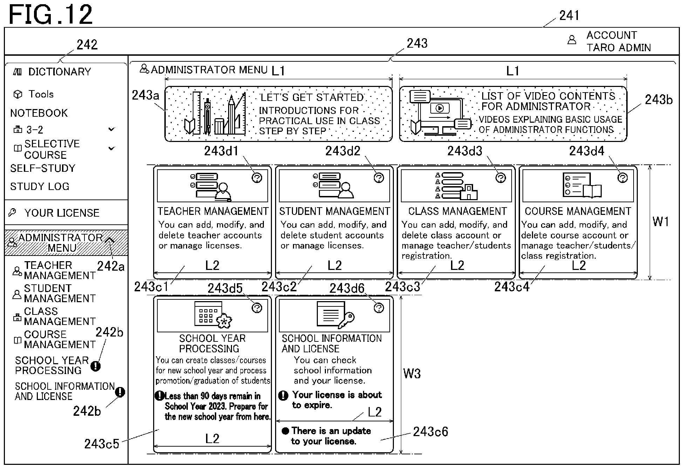

If there is error information (Step A12; YES), the CPU 21 shows an error mark 242b on the item with the error information in the submenu area 242, as shown in FIGs. 10 and 12 (Step A13).

If there is no error information in any item (Step A12; NO), the CPU 21 proceeds to Step A14.

Next, the CPU 21 determines whether there is an item with no error information but with update information in the administrator menu (Step A14).

Update information in "School Information and License" is, for example, the owned license is updated.

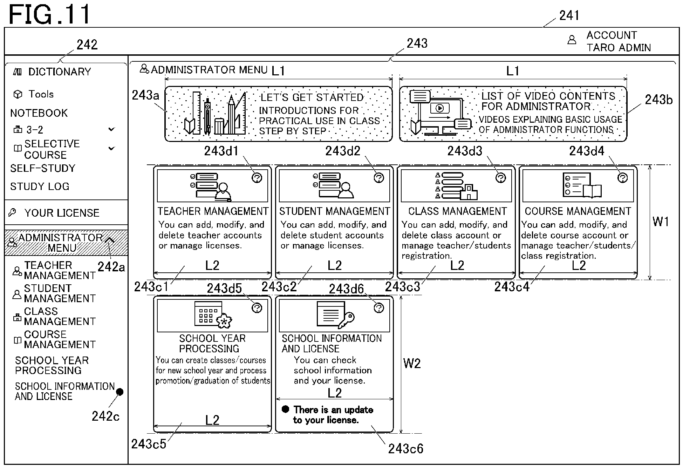

If there is an item without error information but with update information (Step A14; YES), the CPU 21 shows an update mark 242c on the item with no error information but with update information in the submenu area 242, as shown in FIG. 11 (Step A15) .

If there is no item with no error information but with update information (Step A14; NO), the CPU 21 proceeds to Step A16.

The CPU 21 shows an error mark 242b on the item with both error information and update information.

Next, the CPU 21 shows a general manual icon 243a at the top of the administrator menu area 243, as shown in FIGs. 9 to 12 (Step A16). The general manual icon 243a function as a third operation icon. As shown in FIGs. 9 to 12, the length in the horizontal direction (width) of the general manual icon 243a is L1.

The general manual icon 243a is an icon for displaying the manual of the entire administrator support function (second operation manual). In other words, the general manual icon 243a is an icon for displaying a manual of all processes to be executed by pressing process icons 243c (described later) in the administrator menu area 243.

Next, the CPU 21 shows a video icon 243b next to the general manual icon 243a on the right at the top of the administrator menu area 243, as shown in FIGs. 9 to 12 (Step A17). The video icon 243b functions as a fourth operation icon. As shown in FIGs. 9 to 12, the horizontal length (width) of the video icon 243b is L1. The general manual icon 243a and the video icon 243b have substantially the same size.

The video icon 243b is an icon for displaying a list of videos that explain the basic usage of the administrator support function.

Next, the CPU 21 executes a size setting process to set the length (height) in the vertical direction of the process icons 243c1 to 243c6 shown in FIGs. 9 to 12 (Step A18). Hereafter, the process icons 243c1 to 243c6 are collectively referred to as the process icons 243c. Each of the process icons 243c functions as a first operation icon.

As shown in FIGs. 9 to 12, the horizontal length (width) of the process icons 243c is L2, which is shorter than L1, the horizontal length (width) of the general manual icon 243a and the video icon 243b.

The process icon 243c1 is an icon for executing "Teacher Management," one of the items on the administrator menu.

The process icon 243c2 is an icon for executing "Student Management," one of the items on the administrator menu.

The process icon 243c3 is an icon for executing "Class Management," one of the items on the administrator menu.

The process icon 243c4 is an icon for executing "Course Management," one of the items on the administrator menu.

The process icon 243c5 is an icon for executing "School Year Processing," one of the items on the administrator menu.

The process icon 243c6 is an icon for executing "Information and License," one of the items on the administrator menu.

The process icons 243c are shown below the general manual icon 243a and the video icon 243b in line with the general manual icon 243a and the video icon 243b in the administrator menu area 243.

The CPU 21 shows the contents of the process of the administrator menu respectively in the corresponding process icons 243c.

The CPU 21 shows, in the process icon(s) 243c of an item(s) with error information and/or update information, the error information and/or update information.

The row arrangement and display order of the process icons 243c in the administrator menu area 243 are set in advance.

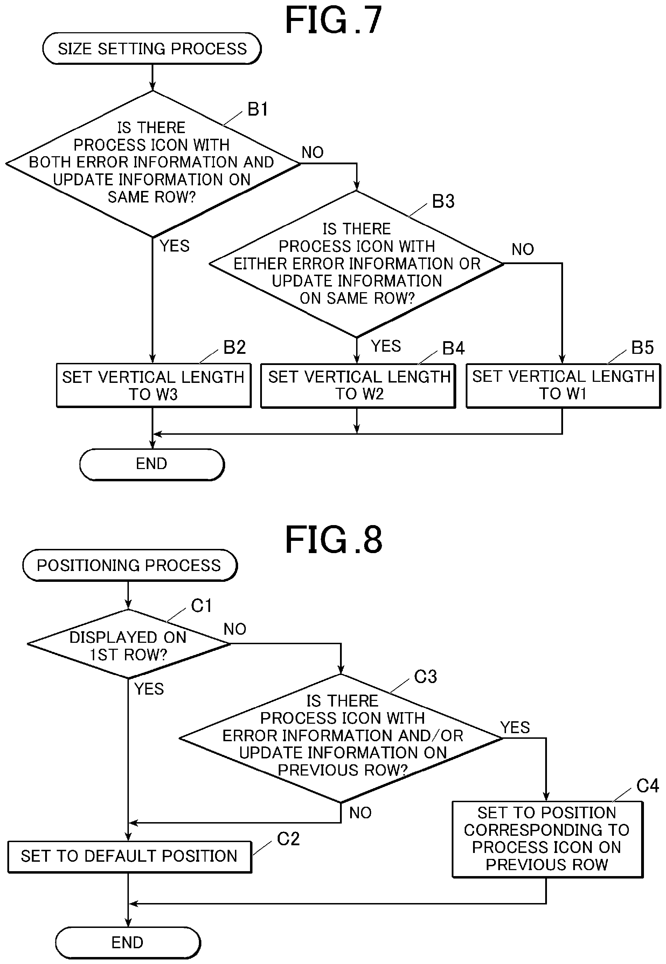

FIG. 7 is a flowchart of a size setting process.

### (Size Setting Process)

In the size setting process, the CPU 21 determines whether there is an item of the administrator menu with both error information and update information in one row of icons. That is, the CPU 21 determines whether there is an icon with error information and update information being displayed thereon among the addressing ions 243c in one row (Step B1).

If there is an icon with error information and update information being displayed thereon among the process icons 243c in one row (Step B1; YES), the CPU 21 sets the size of the process icons 243c in the one row to a size that allows both error information and update information to be shown on one icon (Step B2), and ends the size setting process.

For example, in an example shown in FIG. 12, as there is both error information and update information in "School Information and License," the CPU 21 sets the vertical length (height) of the process icons 243c on the same row which are those of "School Year Processing" and "School Information and License" to W3 that allows both error information and update information to be shown on one icon.

If there is no icon with both error information and update information being displayed thereon among the process icons 243c in one row (Step B1; NO), the CPU 21 determines whether there is an icon with either error information or update information being shown among the process icons 243c in the one row (Step B3).

If there is an icon with either error information or update information being displayed thereon among the process icons 243c in one row (Step B3; YES), the CPU 21 sets the size of the process icons 243c in the one row to a size that allows either error information or update information to be shown on one icon (Step B4), and ends the size setting process.

For example, as there is error information in "Course Management" shown in FIG. 10, the CPU 21 sets the vertical length (height) of the process icons 243c in the same row which are those of "Teacher Management," "Student Management," "Class Management," and "Course Management" to W2, which allows the content of error information to be shown on one icon.

Similarly, as there is update information in "School Information and License" shown in FIG. 11, the CPU 21 sets the vertical length (height) of the process icons 243c in the same row which are those of "School Year Processing" and "School Information and License" to W2, which allows the content of update information to be shown on one icon.

If there is no icon with error information or update information in one row among the process icons 243c (Step B3; NO), the CPU 21 sets the size of the process icons 243c in the one row to the default (Step B5), and ends the size setting process.

For example, as there is no error information or update information in "School Year Processing" and "School Information and License" shown in FIG. 10, the CPU 21 sets the vertical length (height) of the process icons 243c in the same row which are "School Year Processing" and "School Information and License" to W1, the default length.

As shown in FIGs. 9 to 12, regarding the vertical length (height) of the process icons 243c, W1 (default) < W2 < W3.

W1, which is the default vertical length (height) of the process icons 243c, may be set proportionally to the amount of information shown on the process icons 243c in each row. In that case, the CPU 21 sets the size of the process icons 243c in the same row to the size of the maximum-sized icon among them.

Next, the CPU 21 executes a positioning process to set the positions of the process icons 243c shown in FIGs. 9 to 12 (Step A19) .

FIG. 8 shows a flowchart of a positioning process.

### (Positioning Process)

In the positioning process, the CPU 21 determines whether a display row is the first row on the administrator menu (Step C1).

As shown in FIGs. 9 to 12, the items in the first row on the administrator menu are "Teacher Management," "Student Management," "Class Management," and "Course Management." The items in the second row on the administrator menu are "School Year Processing" and "School Information and License."

For the items in the first row on the administrator menu (StepC1; YES), the CPU 21 sets the display positions of the process icons 243c of the items in the first row to the default position (Step C2).

The default position of the process icons 243c in the first row is separated from the display position of the general manual icon 243a or the video icon 243b by a predetermined interval.

For the items in the second or subsequent row on the administrator menu (Step C1; NO), the CPU 21 determines whether there is an icon on which error information and/or update information is among the process icons 243c in the previous row (Step C3).

If there is no icon with error information or update information being displayed thereon among the process icons 243c in the previous row (Step C3; NO), that is, if the vertical length (height) of the process icons 243c in the previous row is W1, the CPU 21 proceeds to Step C2.

Explained below is how the process goes when Step C3 is NO.

In examples shown in FIGs. 9, 11, and 12, there is no error information or update information in the items "Teacher Management," "Student Management," "Class Management," and "Course Management" in the first row. In that case, the CPU 21 sets the position of the process icons 243c of "School Year Processing" and "School Information and License" in the second row to the default position.

The default position of the process icons 243c in the second row is separated from the process icons 243c in the first row in the vertical length (height) of W1 by a predetermined interval.

If there is an icon with error information and/or update information among the process icons 243c in the previous row (Step C3; YES), that is, if the vertical length (height) of the process icons 243c in the previous row is W2 or W3, the CPU 21 sets the process icons 243c in the second and subsequent row(s) to a position that is adjusted with regard to the size of the process icons 243c in the previous row (Step C4), and ends the positioning process.

Explained below is how the process goes when Step C3 is YES.

In an example shown in FIG. 10, as there is error information in "Course Management," the vertical length (height) of the process icons 243c in the first row which are those of "Teacher Management," "Student Management," "Class Management," and "Course Management" is W2. In this case, the CPU 21 sets the position of the process icons 243c in the second row, "School Year Processing" and "School Year and License," to a position separated by a predetermined interval from the position of the process icons 243c in the first row which are in a vertical length (height) of W2.

That is, the position of the process icons 243c "School Year Processing" and "School Information and License" shown in FIG. 10 is a little lower than the position shown in FIGs. 9, 11, and 12.

Back in FIG. 6, the CPU 21 shows each of the process icons 243c in a size set in the size setting process and at a position set in the positioning process in the administrator menu area 243 (Step A20), and ends the screen display process.

At Step A20, the CPU 21 shows, on an icon(s) with error information and/or update information among the process icons 243c, the content of the error information and/or update information.

In an example shown in FIG. 10, the CPU 21 shows a message "There is a course with no teacher registered." on the process icon 243c4 of "Course Management" as the content of the error information.

In an example shown in FIG. 11, the CPU 21 shows a message "There is an update to your license." on the icon of "School Information and License," the process icon 243c6, as the content of the update information.

In an example shown in FIG. 12, the CPU 21 shows a message "Less than 90 days remain in School Year 2023. Prepare for the new school year from here." on the process icon 243c5 of "School Year Processing" as the content of the error information. The CPU 21 shows a message "Your license is about to expire." on the icon of "School Information and License," the process icon 243c6, as the content of the error information. The CPU 21 shows a message "There is an update to your license." on the process icon 243c6 of "School Information and License" as the content of the update information.

At Step A20, the CPU 21 shows an individual manual icon 243d1 (shown in FIGs. 9 to 12) superimposed on the process icon 243c1 of "Teacher Management" in the area of the process icon 243c1 of "Teacher Management."

The individual manual icon 243d1 is an icon for showing an individual manual (first operation manual) concerning the operation process of "Teacher Management."

The CPU 21 shows an individual manual icon 243d2 (shown in FIGs. 9 to 12) superimposed on the process icon 243c2 of "Student Management" in the area of the process icon 243c3 of "Student Management."

The individual manual icon 243d2 is an icon for showing an individual manual (the first operation manual) concerning the operation process of "Student Management."

The CPU 21 shows an individual manual icon 243d3 (shown in FIGs. 9 to 12) superimposed on the process icon 243c3 of "Class Management" in the area of the process icon 243c3 of "Class Management."

The individual manual icon 243d3 is an icon for showing an individual manual (the first operation manual) concerning the operation process of "Class Management."

The CPU 21 shows an individual manual icon 243d4 (shown in FIGs. 9 to 12) superimposed on the process icon 243c4 of "Course Management" in the area of the process icon 243c4 of "Course Management."

The individual manual icon 243d4 is an icon for showing an individual manual (the first operation manual) concerning the operation process of "Course Management."

The CPU 21 shows an individual manual icon 243d5 (shown in FIGs. 9 to 12) superimposed on the process icon 243c5 of "School Year Processing" in the area of the process icon 243c5 for "School Year Processing."

The individual manual icon 243d5 is an icon for showing an individual manual (the first operation manual) concerning the operation process of "School Year Processing."

The CPU 21 shows an individual manual icon 243d6 (shown in FIGs. 9 to 12) superimposed on the process icon 243c6 of "School Information and License" in the area of the process icon 243c6 of "School Year Processing."

The individual manual icon 243d6 is an icon for showing an individual manual (the first operation manual) concerning the operation process of "School Information and License."

Hereafter, the individual manual icons 243d1 to 243d6 are collectively referred to as individual manual icons 243d.

The individual manual icons 243d function as a second operation icon.

In the screen display process described above, the horizontal length (width) of the general manual icon 243a is L1, and the horizontal length (width) of the process icons 243c is L2.

That is, the CPU 21 shows the third operation icon (general manual icon 243a) in an external shape different from that of the first operation icon (the process icons 243c).

In the screen display process, the CPU 21 shows the process icons 243c in a vertical length (height) of W2 when there is error information or update information. The CPU 21 shows the process icons 243c in a vertical length (height) of W3 when there is error information and update information. The CPU 21 shows the process icons 243c in a vertical length (height) of W1 when there is no error information or update information.

The CPU 21 shows the first operation icon (the process icons 243c) in a larger external shape when a predetermined condition is met (when there is error information or update information) than when the predetermined condition is unmet (when there is no error information or update information).

This makes it possible for the process icons 243c to stand out more when there is error information or update information, which may prompt the user to check the error information or update information.

The general manual icon 243a stands out more than the process icons 243c when there is no error information or update information. This may prompt the user to check the manual of the entire administrator support function before executing the operation process of the administrator menu.

In the administrator menu 243 shown in the screen display process, the CPU 21 shows the individual manual icons 243d superimposed on the process icons 243c, where the individual manual icons 243d are respectively linked to the individual manuals corresponding to the operation processes in the administrator menu. That makes it easy for the user to check the individual manual for each of the operation processes.

The general manual icon 243a linked to the manual of the administrator support function corresponding to the administrator menu (operation menu) is shown alongside with the process icons 243c. That makes it easy for the user to check the manual of the entire administrator support function before executing the operation process.

In the administrator menu area 243 shown in the screen display process, the CPU 21 shows the fourth operation icon (the video icon 243b) linked to an explanatory video corresponding to the administrator menu (the operation menu) in the same external size as that of the third operation icon (the general manual icon 243a) alongside with the first operation icon (process icons 243c) .

This may prompt the user to watch the video explaining the basic usage of the administrator support function before executing the operation process.

In the administrator menu area 243 shown in the screen display process, the CPU 21 shows the third operation icon (the general manual icon 243a) and the fourth operation icon (the video icon 243b) at the top of the display screen, and shows the first operation icon (the process icons 243c) under the third operation icon and the fourth operation icon.

Therefore, the general manual icon 243a and the video icon 243b stand out more than the process icons 243c. This may prompt the user to check the manual of the entire administrator support function or watch the video explaining the basic usage of the administrator support function.

As shown in FIGs. 9 to 12, the appearance of the general manual icon 243a and the video icon 243b may be different from that of the process icons 243c so that the user can easily distinguish them. Specifically, the background color or text color of the general manual icon 243a and the video icon 243b may be different from that of the process icons 243c.

Back in FIG. 5, the CPU 21 receives a commanding operation from the user via the operation receiver 22 in the administrator menu screen 241 and executes the process corresponding to the commanding operation (Step A2). Then the CPU 21 ends the administrator support process.

If the user presses an item of the administrator menu shown in the submenu area 242 at Step A2, the CPU 21 executes the process corresponding to the pressed item of the administrator menu. Specifically, the CPU 21 expands an execution area 244 for executing the process of the pressed item of the administrator menu 241.

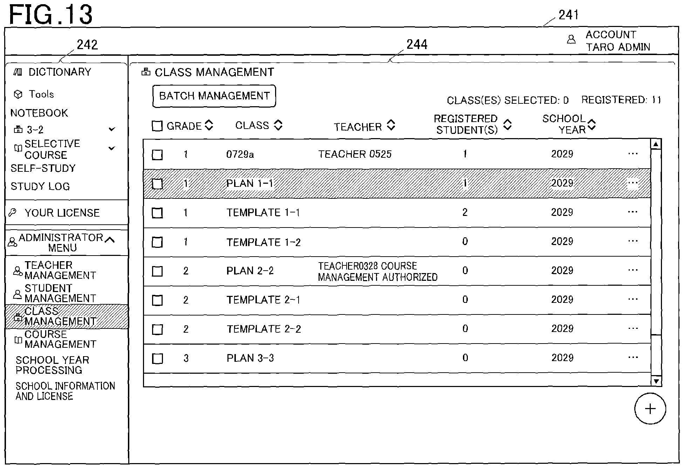

FIG. 13 shows an example of the administrator menu screen 241 including the execution area 244 of "Class Management."

If the user presses the general manual icon 243a at Step A2, the CPU 21 opens a different tab than the administrator menu screen 241 and shows the manual of the entire administrator support function in that tab.

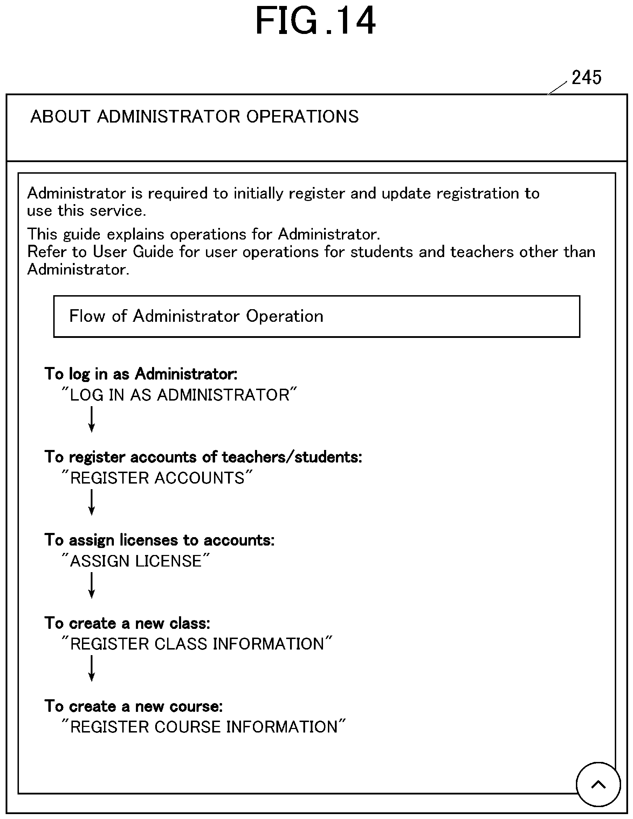

FIG. 14 is an example of a general manual screen 245 that shows the manual of the administrator support function.

If the user presses the video icon 243b at Step A2, the CPU 21 opens a tab different from the administrator menu screen 241 and shows a list of the videos explaining the basic usage of the administrator support function in that tab.

If the user presses one of the individual manual icons 243d on the process icons 243c at Step A2, the CPU 21 opens a different tab than the administrator menu screen 241 and shows the individual manual concerning the administrator menu corresponding to the pressed one of the individual manual icons 243d in that tab.

For example, if the user presses the individual manual icon 243d1 on the process icon 243c1 of "Teacher Management," the CPU 21 shows the individual manual concerning "Teacher Management" in a new tab.

For example, if the user presses the individual manual icon 243d2 on the process icon 243c2 of "Student Management," the CPU 21 shows the individual manual concerning "Student Management" in a new tab.

For example, if the user presses the individual manual icon 243d3 on the process icon 243c3 of "Class Management," the CPU 21 shows the individual manual concerning "Class Management" in a new tab.

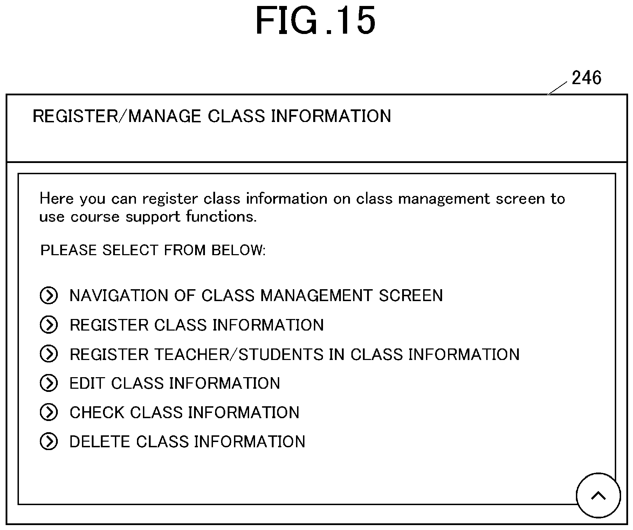

FIG. 15 is an example of the individual manual screen 246 that shows the individual manual of "Class Management."

For example, if the user presses the individual manual icon 243d4 on the process icon 243c4 of "Course Management," the CPU 21 shows the individual manual concerning "Course Management" in a new tab.

For example, if the user presses the individual manual icon 243d5 on the process icon 243c5 of "School Year Processing," the CPU 21 shows the individual manual concerning "School Year Processing" in a new tab.

For example, if the user presses the individual manual icon 243d6 on the process icon 243c6 of "School Information and License," the CPU 21 shows the individual manual concerning "School Information and License" in a new tab.

The CPU 21 opens a new tab every time the user presses the general manual icon 243a, the video icon 243b, or the individual manual icons 243d. The CPU 21 then opens an initial screen (front screen) of the corresponding manual on the new tab. When the user inputs an operation of closing the tab, the CPU 21 closes the tab on which the user has input the operation.

When the user presses an area other than the individual manual icons 243d on one of the process icons 243c at Step A2, the CPU 21 executes the process of the administrator menu corresponding to the pressed one of the process icons 243c. Specifically, the CPU 21expands the execution area 244 for executing the process of the pressed item of the administrator menu 241. The execution area 244 here is the same as the execution area 244 that the CPU 21 expands when the user presses an item on the administrator menu displayed in the submenu area 242. That is, the execution area 244 here is, for example, the execution area 244 for "Class Management" shown in FIG. 13.

### <3. Effects>

The operation support device (terminal device 20) according to the present embodiment displays at least one operation icon as a predetermined operation menu. The operation support device includes the controller (CPU 21) that shows the operation icon as a first operation icon (process icons 243c) for opening an operation screen (execution area 244) for executing a predetermined operation process. The controller disposes a second operation icon (individual manual icon 243d) associated with a link to a first operation manual (individual manual) corresponding to the operation process within an area of the first operation icon, and shows a third operation icon (general manual icon 243a) associated with a link to a second operation manual (manual for overall administrator support function) corresponding to the operation menu with the first operation icon.

Therefore, as the individual manual icons 243d associated with links to the individual manuals corresponding to the operation processes in the areas of the process icons, the user can intuitively grasp the operation positions for showing the individual manuals corresponding to the operation processes. This makes it easy for the user to check the individual manual of each of the operation processes.

As the general manual icon 243a associated with a link to the manual for the overall administrator support function corresponding to the operation menu is shown with the process icon 243c, the user can easily check the manual for the administrator support function before executing the operation process.

This makes it easier for the user to understand how to operate the functions that the device has. Therefore, the operation support device (terminal device 20) can reliably support the user in executing technical tasks with the interaction process between the user and the machine (appropriately executing various kinds of functions of the device according to the user's purpose).

In response to input of a user operation on the first operation icon, the controller (CPU 21) of the operation support device (terminal device 20) according to the present embodiment opens an individual operation screen for executing an individual operation process corresponding to the first operation icon on which the user operation is input. And in response to input of a user operation on the second operation icon, the controller (CPU 21) shows the first operation manual dedicated to explanation of the individual operation process corresponding to the first operation icon within whose area disposed is the second operation icon on which the user operation is input. And in response to input of a user operation on the third operation icon, the controller (CPU 21) shows the second operation manual for explanation of an entirety of a plurality of operation processes, each of the operation processes being the individual operation process whose operation screen is opened from the operation menu.

The controller (CPU 21) of the operation support device (terminal device 20) according to the present embodiment changes, while executing the individual operation process in response to a user operation on the individual operation screen, a display position or an external size of the first operation icon corresponding to a state of the individual operation process.

This makes it possible to reliably support the user in executing technical tasks while the user keeps checking the internal state of the device which is dynamically changing in accordance with the user operations.

The controller (CPU 21) of the operation support device (terminal device 20) according to the present embodiment shows the third operation icon in an external shape different from an external shape of the first operation icon.

This makes it possible for the general manual icon 243a to stand out more than the process icons 243c. Therefore, it is possible to prompt the user (especially, a novice user) to check the manual of the administrator support function before the user executes an operation process in the administrator menu.

The controller (CPU 21) of the operation support device (terminal device 20) according to the present embodiment shows, with the first operation icon (process icons 243c), a fourth operation icon (video icon 243b) in an external size same as the external size of the third operation icon (general manual icon 243a), the fourth operation icon being associated with a link to an explanation video corresponding to the operation menu.

This may prompt the user (especially a novice user) to watch the video explaining the basic usage of the administrator support function before executing the operation process.

The controller (CPU 21) of the operation support device (terminal device 20) according to the present embodiment shows the third operation icon (general manual icon 243a) and the fourth operation icon (video icon 243b) at a top of a display screen and shows the first operation icon (process icons 243c) below the third operation icon and the fourth operation icon.

This makes it possible for the general manual icon 243a and the video icon 243b to stand out more than the process icons 243c, which may prompt the user (especially a novice user) to check the manual of the entire administrator support function or watch the video explaining the basic usage of the administrator support function.

The controller (CPU 21) of the operation support device (terminal device 20) according to the present embodiment shows the first operation icon (process icons 243c) in a larger external size when a predetermined condition about the changed internal state is satisfied than when the predetermined condition is not satisfied.

The predetermined condition is that there is error information or update information in the operation process.

This makes it possible for the process icons 243c to stand out when the predetermined condition is met (there is error information or update information). This may prompt the user to check error information or update information.

This makes it possible for the general manual icon 243a to stand out more than the process icons 243c when the predetermined condition is met (there is no error information or update information). This may prompt the user (especially a novice user) to check the manual of the entire administrator support function before executing the operation process.

Although some embodiments of the present disclosure have been described hereinbefore, the scope of the present invention is not limited to the described embodiments and includes the scope of the invention described in the claims and its equivalents.

For example, the terminal device 20 functions as the operation support device, and the CPU 21 functions as the controller in the embodiments described above. But the present invention is not limited thereto. The server 10 may function as the operation support device and the CPU 11 may function as the controller.

The terminal device 20 in the learning support system 1 is the operation support system in the embodiments described above, but an information processing device in other systems may function as the operation support device.

In the description hereinbefore, the storage 25 (HDD, SSD) is used as the computer-readable medium for the program concerning the present invention, but the present invention is not limited thereto. A portable recording medium such as a flash memory or a CD-ROM is also viable as other computer-readable media. Carrier wave may be applicable to this invention as the medium that provides the program data concerning the present invention via the communication lines.

## Claims

1. An operation support device (20) that displays at least one operation icon as a predetermined operation menu, comprising:
a processor that shows the operation icon as a first operation icon (243c) for opening an operation screen for executing a predetermined operation process,
wherein the processor:
disposes a second operation icon (243d) associated with a link to a first operation manual corresponding to the operation process within an area of the first operation icon; and
shows a third operation icon (243a) associated with a link to a second operation manual corresponding to the operation menu with the first operation icon.

2. The operation support device according to claim 1,
wherein a plurality of operation icons, each of which is the operation icon, are displayed in an array as the predetermined operation menu,
wherein the processor shows each of the plurality of operation icons as the first operation icon.

3. The operation support device according to claim 1,
wherein the processor (21):
in response to input of a user operation on the first operation icon, opens an individual operation screen for executing an individual operation process corresponding to the first operation icon on which the user operation is input;
in response to input of a user operation on the second operation icon, shows the first operation manual dedicated to explanation of the individual operation process corresponding to the first operation icon within whose area disposed is the second operation icon on which the user operation is input; and
in response to input of a user operation on the third operation icon, shows the second operation manual for explanation of an entirety of a plurality of operation processes, each of the operation processes being the individual operation process whose operation screen is opened from the operation menu.

4. The operation support device according to claim 3,
wherein the processor changes, while executing the individual operation process in response to a user operation on the individual operation screen, a display position or an external size of the first operation icon corresponding to a state of the individual operation process.

5. The operation support device according to claim 1,
wherein the processor:
changes an internal state concerning the individual operation process in response to the execution of the individual operation process or a change in information obtained for the individual operation process; and
shows the first operation icon in a larger external size when a predetermined condition about the changed internal state is satisfied than when the predetermined condition is not satisfied.

6. The operation support device according to claim 5,
wherein the predetermined condition about the internal state concerning the individual operation process is that there is error information or update information in the individual operation process; and
wherein the processor changes, when there is error information or update information in the individual operation process, an external size of the first operation icon so as to show the error information or the update information in the individual operation process within the area of the first operation icon corresponding to the individual operation process and shows the error information or the update information within the area of the first operation icon whose external size is changed.

7. The operation support device according to claim 6,
wherein the processor changes the display position of the first operation icon corresponding to the changed external size of the first operation icon.

8. The operation support device according to claim 7,
wherein the first operation icon includes a plurality of first operation icons,
wherein the plurality of first operation icons are arrayed in a first direction and in a second direction different from the first direction,
wherein, when changing the external size of one of the plurality of first operation icons which are at a same display position in the first direction and arrayed in the second direction, the processor changes in synchronization the external size of other ones of the plurality of first operation icons which are at the same display position in the first direction as the one of the plurality of first operation icons.

9. The operation support device according to claim 8,
wherein, when changing the external size of the one of the plurality of first operation icons, the processor changes the external size in the first direction of the other ones of the plurality of first operation icons which are shown at the same display position in the first direction as the one of the plurality of first operation icons, and also changes in synchronization a display position in the first direction of other ones of the plurality of first operation icons which are at a different display position in the first direction than the one of the plurality of first operation icons.

10. The operation support device according to claim 1,
wherein the processor shows the third operation icon outside the area of the first operation icon.

11. The operation support device according to claim 1,
wherein the processor shows the third operation icon in an external shape different from an external shape of the first operation icon.

12. The operation support device according to claim 11,
wherein the processor shows, with the first operation icon, a fourth operation icon (243b) in an external size same as the external size of the third operation icon, the fourth operation icon being associated with a link to an explanation video corresponding to the operation menu.

13. The operation support device according to claim 12,
wherein the processor shows the third operation icon and the fourth operation icon at a top of a display screen and shows the first operation icon below the third operation icon and the fourth operation icon.

14. An operation support method in an operation support device (20) that shows at least one operation icon as a predetermined operation menu, the method including:
executing a display control processing to show the operation icon as a first operation icon (243c) for opening an operation screen for executing a predetermined operation process,
wherein the method includes in the display control processing:
disposing a second operation icon (243d) associated with a link to a first operation manual corresponding to the operation process within an area of the first operation icon; and
showing, with the first operation icon, a third operation icon (243a) associated with a link to a second operation manual corresponding to the operation menu.

15. A program executable by a computer of an operation support device (20) that shows at least one operation icon as a predetermined operation menu, the program causing the computer to function as:
a controller (21) that shows the operation icon as a first operation icon (243d) for opening an operation screen for executing a predetermined operation process,
wherein the controller:
disposes a second operation icon (243d) associated with a link to a first operation manual corresponding to the operation process within an area of the first operation icon; and
shows, with the first operation icon, a third operation icon (243a) associated with a link to a second operation manual corresponding to the operation menu.
